# EUROPEAN PATENT APPLICATION

(11) **EP 4 715 373 A1**
(43) Date of publication of application: **25.03.2026**
(21) Application number: 24201938.8
(22) Date of filing: 23.09.2024
(51) Int. Cl.: G01N 21/95, G01B 11/25, G01N 21/952

(54) **CABLE INSPECTION SYSTEM**

(71) Applicant: Komax Singapore Pte. Ltd., 416259 Singapore (SG)
(72) Inventor: Tay, Vincent, 653461 Singapore (SG); Wei, Haitao, 513525 Pasir Ris (SG)
(74) Representative: Zimmermann & Partner Patentanwälte mbB

(57) **Abstract**

The invention relates to an inspection system (1) for optical inspection of a cable portion (102) of a processed cable (100), the inspection system comprising: a cable holder (10) configured for holding the processed cable (100) such that the cable portion (102) is arranged in an inspection area (20) of the inspection system (1), an optical system (30) comprising a light pattern emitter (32) and an optical receiver (34), wherein the light pattern emitter (32) is configured and arranged to emit a two-dimensional structured source light pattern (40) towards the inspection area (20) such that the two-dimensional structured source light pattern (40) is projected on and reflected by a surface (120) of the cable portion (102), when the cable portion (102) is arranged in the inspection area (20), such that a reflected two-dimensional light pattern (42) is reflected by the surface (120) of the cable portion (102), wherein the optical receiver (34) is arranged and configured to receive the reflected two-dimensional light pattern (42). The inspection system (1) can further comprise an analysis device (50) configured to receive a reflection data set from the optical system (30), to determine a three-dimensional profile of the cable portion (102), and to determine at least one characteristic of the cable portion (102) based on the three-dimensional profile.

## Description

Cables can be processed and modified in different ways. For example, a crimp can be applied. It is also possible that a cable can have multiple layers wherein one layer is or several layers are partially removed in particular portions of the cable.

Such a processed (modified, treated, machined) cable can be further used in downstream processes. It can be further processed and/or integrated in an assembly, e.g. a wiring harness. Therefore, it is necessary that the processing is of good quality, particularly error-free. To ensure this, inspection of a processed cable is required.

An example of the processing of a cable, particularly a wire, is a crimp. Wire crimps can be produced using a crimping machine, using a combination of wire and terminal, with monitoring being done to ensure quality crimps. The crimp machines can be semi-automatic or fully automatic, where the former requires the insertion of wire by an operator and press the button from an operator, while the latter's production process is triggered by the machine itself, for an automated production of crimp. The production processes can be similar, beginning with the insertion of a stripped wire to a terminal; second, crimp terminal; third, inspect crimp; fourth, utilize or scrap crimp.

For the third step to inspect a crimp, different equipment can be used in order to get different crimp parameters. For a real-time analysis during the crimping procedure, a Crimp Force Monitor (CFM) can be used. However, analysis is dependent on the learn curve and stability of the crimping machine which can impact accuracy. After a crimp attachment, micrometres can be used to determine the crimp height and/or width. However, due to the effort required, micrometres are only suitable for sample tests, thus limiting the efficiency of the method. Pull testers can be used to conduct a pull force test, to pull a wire from the terminal to determine whether the crimp force was just enough to compress the terminal around the wire. Together with a micrograph laboratory, cameras can be used to analyse the cross section of the crimp to determine whether identified parameters meet the specifications. For doing this, the crimp must be grinded at the desired position before. The destructive nature of the last two methods can lead to scrap, while micrograph analysis can require significant time.

Hence, there is a need for a system that allows a fast inspection of the modified cable and reduces the scrap material.

This problem is solved by the inspection system according to claim 1, the cable processing system of claim 11 and the method according to claim 14. Preferred embodiments of these aspects of the present invention are stated in the corresponding sub claims and/or are described below.

A first aspect of the invention relates to an inspection system for optical inspection of a cable portion of a processed cable. The inspection system can comprise a cable holder configured for holding the processed cable such that the cable portion is arranged in an inspection area of the inspection system. The inspection system can comprise an optical system comprising a light pattern emitter and an optical receiver. The light pattern emitter can be configured and arranged to emit a two-dimensional structured source light pattern towards the inspection area such that the two-dimensional structured source light pattern is projected on and reflected by a surface of the cable portion, when the cable portion is arranged in the inspection area, such that a reflected two-dimensional light pattern is reflected by the surface of the cable portion. The optical receiver can be arranged and configured to receive the reflected two-dimensional light pattern. The inspection system can further comprise an analysis device communicatively connected with the optical system, wherein the analysis device is configured to receive a reflection data set from the optical system, wherein the reflection data set is indicative of the reflected two-dimensional light pattern. The analysis device can be configured to determine a three-dimensional profile of the cable portion based on the received reflection data set. The analysis device can be configured to determine at least one characteristic of the cable portion based on the three-dimensional profile.

The processed cable can be a processed wire, e.g., a crimped wire. The processed cable can be a processed multi-layer cable, wherein at least one specific layer is stripped, particularly wherein a plurality of layers is stripped. The layers can be stripped over different lengths. The processed cable can be a cable with a modifier (modification). The modification can be a seal, a terminal, a connector, a plug, a ferrule, a tape and/or a connector housing. The processed cable can be a cable with a contamination.

The inspection area can be arranged in an interior space of an inspection chamber of the inspection system. The interior space of the inspection chamber can comprise or consist of the inspection area.

The cable holder can be a gripper. The cable holder can be a clamp. The cable holder can be a pneumatic holder. The cable holder can be a motorized holder.

The cable holder can be configured to repeatedly removably hold the processed cable.

The cable holder can be configured and arranged or arrangeable for holding the processed cable such that the cable portion is arranged in the interior space of the inspection chamber of the inspection system. The cable holder can be configured for moving the cable portion into the inspection area. The cable holder can be configured for removing the cable portion from the inspection area.

The light pattern emitter can be a projector. The light pattern emitter can be configured to project fringe patterns. The light pattern emitter can be configured to project the source light pattern of a pre-specified size.

The optical receiver can be an optical camera. The optical receiver can be a high-speed camera.

The light pattern emitter and the optical receiver can be arranged with an oblique angle to each other. The light pattern can be arranged to capture the reflected pattern from another direction.

In an embodiment, the optical system can be configured for fringe projection profilometry (FPP). In an embodiment, the optical system is configured for surface emission (structured source light pattern) and surface capture (reflected two-dimensional light pattern).

The structured source light pattern can comprise or consist of a plurality of light spots. The structured source light pattern can comprise or consist of a plurality of light lines. The structured source light pattern can comprise or consist of a plurality of fringes. The structured source light pattern can comprise or consist of a fringe pattern. In an embodiment, the structured source light pattern can comprise or consist of a series of vertical light planes. In an embodiment, the structured source light pattern can comprise or consist of a series of parallel vertical light planes. The structured source light pattern can comprise of consist of a stripe pattern. The structured source light pattern can be a designed sinusoidal fringe pattern. The structured source light pattern can be a pattern configured for fringe projection profilometry (FPP). The shape and/or the size of the structured source light pattern can be adapted particularly depending on characteristics of the processed cable (e.g. the diameter of the cable and/or the size of the modification). In an embodiment, the emitter can project the structured source light pattern to the whole surface of the object (cable) achievable. The projector can be configured to display multiple moveable laser lines onto the surface of the cable portion of the processed wire, e.g. on the surface of the crimped wire. The projector can be configured to emit a sequence of coded patterns to the surface of the object (cable) achievable.

In an embodiment, the inspection system is configured for performing a vertical binary encoded light stripe method for reconstructing 3D profile. A series of vertical light planes can be cast onto the object (cable portion). The series of vertical light planes can be defined by the intersection of black and white fringes with progressively halving periods. The camera can capture a temporal sequence of light intensities at each pixel.

The optical system can be configured to emit the pattern on the surface of interest of the cable portion and to detect the reflected pattern reflected by the surface of interest of the cable portion. The projector can be configured to emit the pattern on the surface of interest of the cable portion. The optical receiver can be configured to detect the reflected pattern reflected by the surface of interest of the cable portion at once. The optical receiver can be arranged and configured to capture the entire reflected pattern at the same time.

The optical system can be configured to measures a distance of the surface of the cable portion from the optical receiver. The optical receiver can be configured to measures a distance of the surface of the cable portion from the optical receiver. The analysis device can be configured to determine the distance of the surface of the cable portion from the optical receiver. The optical system can be configured to determine a distance profile of the surface of the cable portion from the optical receiver. The optical system can be configured to determine a height profile of the surface of the cable portion. The optical system can be configured to determine the distortion of the source light pattern by the cable portion. The height profile can be determined based on the distortion information. The distance between the surface of the cable portion and the optical receiver can be determined based on the distortion information.

The source light pattern and the reflected light pattern can be compared. The deviation can give a measure for the shape of the surface, e.g. a height profile of the surface of the cable portion.

In an embodiment, the projected grey level and the reflected captured grey level can be compared by the analysis device. In an embodiment, the intensities of the emitted pattern and the intensities of the reflected pattern can be compared by the analysis device.

The surface of the processed cable can reflect the light pattern. When the source light pattern is projected on the surface, the source pattern can be distorted. The camera can capture the distorted reflected pattern. The deformation can provide information about the shape of the surface.

The analysis device can be configured to receive the reflection data set from the optical receiver. The reflection dataset can be based on the reflected two-dimensional light pattern. The reflection dataset can represent the reflected two-dimensional light pattern. The reflection dataset can describe the reflected two-dimensional light pattern.

The analysis device can be configured to generate the 3D profile of the surface of the cable portion. The analysis device can be configured to generate the 3D profile of the surface of the cable portion based on the distance information and/or height information. The analysis device can be configured to generate the 3D profile by combining a plurality of data sets (and/or relating distance information and/or height information) recorded from different viewing angles. The processed wire (via the cable holder) and/or the camera and projector can be rotated to get the 3D profile of another surface of the cable portion. The inspection system can comprise multiple cameras and/or projectors arranged at different viewing angles. The process can be repeated until adequate information is gathered, whereinafter a software and/or a control system (and/or the analysis device) can be configured stitch the data to generate a complete 3D profile of the cable portion. Key parameters can be identified. Processing quality can be determined.

The analysis device can be connected by a wire with the optical system. The analysis device can be connected wirelessly with the optical system.

The analysis device can be configured to determine a 3D surface profile of the outer surface of the cable portion. The analysis device can be configured to reconstruct (generate) the 3D surface profile of the outer surface of the cable portion. The analysis device can be configured to map the surface of the processed wire, particularly of the cable portion. The analysis device can be configured to determine the three-dimensional profile, particularly the 3D surface profile of the outer surface, based on the received reflection data set and information associated with the emitted two-dimensional structured source light pattern. The analysis device can be configured to analyse FPP data.

The analysis device can be configured to generate a cross section analysis based on the 3D profile.

The analysis device can be configured to determine specific characteristics of the processed wire, particularly of the cable portion, based on the three-dimensional profile. The analysis device can be configured to determine processing parameters and/or measurements and/or the shape. The analysis device can be configured to determine the symmetry of the processing (e.g. the relative arrangement of the cable and the attached modifier). The analysis device can be configured to determine irregularities of the processing. The analysis device can be configured to determine irregularities of the processed cable.

The analysis device can be configured to evaluate the quality of the processing based on the 3D surface profile. The analysis device can be configured to evaluate the quality of the processing based on at least one of the determined specific characteristics of the processed wire, particularly of the cable portion.

The analysis device can be configured to output a quality measure. The analysis device can be configured to output an alert, if the quality measure is below a pre-determined quality threshold.

The information associated with the emitted two-dimensional structured source light pattern can comprise information with regard to each pixel of the projected fringe pattern.

The analysis device can be a computing device. The analysis device can comprise a processor. The analysis device can comprise a memory storing instructions.

An advantage can be that the analysis of the cable portion and/or the quality of the processing can be performed in a non-destructive manner. An advantage can be that waste can be reduced. Analysed cables can be used in downstream processes.

An advantage can be that the reconstruction of the 3D profile can be used for a real-time analysis of the quality of the processing, e.g. crimp quality, and/or tools monitoring and/or process monitoring.

An advantage can be that the inspection system is configured for a contactless inspection of the cable portion. The inspection process using the inspection system can analyse the cable portion without damage of the respective cable.

The inspection system can use a projector and a camera to provide data to generate a complete 3D profile for analysis of the processing process and/or the processing quality. The inspection system can provide a cross section analysis of the processed cable, for instance of tilted crimps. The inspection system can enable the analysis while production is ongoing. The inspection system can be configured for process monitoring.

The FPP method can advantageously allow a non-contact, high precision and high efficiency analysis of cable processing, particularly quality of cable processing.

An advantage can be that the pattern emitter can emit a patterned signal source (structured source light pattern) to the whole surface of the object (particularly the whole surface achievable from the position of the light pattern emitter), and without relative movement between the cable and the optical system. The light pattern emitter and the optical receiver can capture the whole surface by the changing emission pattern.

The system comprising the pattern emitter can be faster than a system considering a single light beam, because the emitted pattern can cover the whole surface, such that no further relative plotting movement is required. Since it does not require the relative movement, the risk of inaccuracy due to the relative movement between the cable and the inspection system can be reduced. Advantageously, the accuracy of the inspection process can be improved. The fixed position of the cable in relation to the inspection system, particularly the optical system, can reduce the risk of inaccurate "plotting" due to object/measurement module vibration or another unexpected misalignment.

The inspection system for optical inspection of the cable portion can comprise: a cable holder configured for holding the processed cable such that the cable portion is arranged in an inspection area of the inspection system, an optical system comprising a light pattern emitter and an optical receiver, wherein the light pattern emitter is configured and arranged to emit a two-dimensional structured source light pattern towards the inspection area such that the two-dimensional structured source light pattern is projected on and reflected by a surface of the cable portion, when the cable portion is arranged in the inspection area, such that a reflected two-dimensional light pattern is reflected by the surface of the cable portion, wherein the optical receiver is arranged and configured to receive the reflected two-dimensional light pattern. The inspection system can further comprise an analysis device configured to receive a reflection data set from the optical system, to determine a three-dimensional profile of the cable portion, and to determine at least one characteristic of the cable portion based on the three-dimensional profile.

The inspection system can be designed to evaluate the crimping quality of crimped wires using 3D scanning technology to identify bad crimps. For example, a faulty crimp may be indicated by an extruding single wire strand, non-uniform crimp, or a crimp with a damaged surface.

The analysis of the processing quality can also allow conclusions about the status of the processing module which performed the processing. Monitoring of the processing module can be enabled. An advantage can be that it can be determined when a maintenance of the processing module is required.

The inspection system can be configured to analyse the parameters, measurements, image, shape, symmetry and/or irregularities observed from the generated 3D profile to determine the quality of the processing.

The inspection system can be configured to collect the data and information for analysis by sending a reference signal from a signal transmitting source (light pattern emitter, light source, laser transmitter, LiDar) and determining the distance of multiple points of the target (cable portion) when the reflected signal is received by the receiver (camera, sensor). With the data, the inspection system can map the 3D profile and can use the 3D profile to determine measurements and parameters for processing analysis. The inspection system can measure the surface of the cable portion to obtain its 3D profile.

The inspection system can comprise a control unit configured to control the inspection system.

In an embodiment the optical system and the cable holder are arrangeable in a first position relative to each other and arrangeable in a second position relative to each other. In an embodiment, the cable holder and/or the optical system are rotatable relative to each other from the first position to the second position.

In an embodiment, the cable holder is rotatable relative to the optical system from the first position to the second position. In an embodiment, the optical system is rotatable relative to the cable holder from the first position to the second position. In an embodiment, the cable holder and the optical system are rotatable relative to each other from the first position to the second position.

In an embodiment, the optical system and the cable holder can be arrangeable at least in the first position and the second position relative to each other. In an embodiment, the optical system and the cable holder can be arrangeable in more than two positions relative to each other. In an embodiment, the optical system and the cable holder can be arrangeable in at least three positions relative to each other. In an embodiment, the optical system and the cable holder can be arrangeable in at least four positions relative to each other. In an embodiment, the optical system and the cable holder can be arrangeable in at least six positions relative to each other.

In an embodiment, the cable holder and/or the optical system are rotatable relative to each other from the first position to the second position and from the second position to the first position. In an embodiment, the cable holder and/or the optical system are reversibly rotatable relative to each other from the first position to the second position.

In an embodiment, the cable holder and/or the optical system are rotatable relative to each other from the first position to the second position and from the second position to a third position.

In an embodiment, the cable holder is rotatable while the optical system is spatially locked. In an embodiment, the optical system is rotatable while the cable holder is spatially locked. In an embodiment, the cable holder is rotatable and the optical system is rotatable.

In an embodiment, the cable holder and the optical system can simultaneously rotate, particularly wherein the cable holder and the optical system rotate in opposite direction (e.g. cable holder clockwise and optical system anti-clockwise or vice versa).

In an embodiment, the cable holder is rotatable and the optical system is arranged in a stationary position. In an embodiment, the optical system is rotatable and the cable holder is arranged in a stationary position.

The rotation can be a stop-and-go-rotation.

The cable holder and/or the optical system can be rotatable around a rotation axis. In an embodiment, the rotation axis can extend through the centre of the inspection area. In an embodiment, the rotation axis can extend off-centre.

The cable holder can be rotated successively multiple times. In an embodiment, the cable holder can be configured for repeated successive rotational movement. In an embodiment, cable holder can be rotated successively multiple times by the same angle. In an embodiment, the cable holder is reversibly rotatable.

The optical system can be rotated successively multiple times. In an embodiment, the optical system can be configured for repeated successive rotational movement. In an embodiment, optical system can be rotated successively multiple times by the same angle. In an embodiment, the optical system is reversibly rotatable.

The optical system can be configured for obtaining, from a stationary first angle (relating to the first position), a first reflection data set associated with the first angle and indicative of a three-dimensional partial surface profile of the cable portion. The optical system can be configured for obtaining, from a stationary second angle (relating to the second position), a second reflection data set associated with the second angle and indicative of a three-dimensional partial surface profile of the cable portion. The partial surface of the partial surface profile can be an extended surface and more than merely a single point. The partial surface may correspond to the surface part of the cable portion visible from the respective angle (first angle, second angle).

In an embodiment, the cable holder and/or the optical system are rotatable relative to each other from the first angle to the second angle.

An advantage can be that the system can be configured for capture the whole surface, and only requires to rotate to the next angle of surface to repeat the emission/reception steps. The system can be configured to stich the few surfaces together to get the 3D profile. An advantage can be that no continuous movement is necessary to receive a profile. The accuracy and efficiency can advantageously be increased.

The inspection system can be configured to scan and capture data by staying stationary. The inspection system can be configured to scan and capture data by rotating the signal transmitting source and/or receiving unit. The inspection system can be configured to scan and capture data by rotating the cable portion (particularly via rotation of the cable holder).

The analysis system can merge all surface data of the cable portion relating to the different angles and reconstruct a full 3D profile of the cable portion. The analysis system can combine surface data of the cable portion relating to the different angles for the reconstruction of a full 3D profile of the cable portion. The analysis system can make a measurement and/or an observation on the 3D profile of the cable portion. The analysis system can determine a potential quality issue of the cable portion by measuring and/or analysing the reconstructed 3D profile.

In an embodiment the optical system comprises a plurality of light pattern emitters, wherein each light pattern emitter is arranged at a predetermined location at the inspection area, wherein each light pattern emitter of the plurality of light pattern emitters is arranged and configured to emit the respective source light pattern towards a respective section of the inspection area such that the respective source light pattern is projected on a respective examination region of the surface of the cable portion, and that for each light pattern emitter the relating reflected data set is receivable.

In an embodiment for each light pattern emitter and its relating location the relating reflected data set is receivable.

The optical system can comprise plurality of optical receivers. In an embodiment, the number of light pattern emitters is equal to the number of optical receivers. In an embodiment, each emitter relates to a respective receiver. In an embodiment, the inspection system comprises different amounts of light pattern emitters and optical receivers. In an embodiment, each two optical receivers (cameras) are associated to each one light pattern emitter.

In an embodiment, the plurality of light pattern emitters is equidistantly arranged around the inspection area.

In an embodiment, the plurality of light pattern emitters and the plurality of optical receivers are arranged on a circumferential path around the inspection area. In an embodiment, the plurality of light pattern emitters and the plurality of optical receivers are arranged on a circular path around the inspection area. In an embodiment, the plurality of light pattern emitters and the plurality of optical receivers are arranged with equal spacing on a circular path around the inspection area.

In an embodiment, the plurality of light pattern emitters is arranged on a circumferential path around the inspection area. In an embodiment, the plurality of light pattern emitters is arranged on a circular path around the inspection area. In an embodiment, the inspection system comprises two light pattern emitters arranged offset by 180° to each other. In an embodiment, the inspection system comprises four light pattern emitters arranged offset by 90° to each other.

In an embodiment, the plurality of light pattern emitters can be rotated simultaneously. In an embodiment, the plurality of light pattern emitters can be rotated equally. In an embodiment, each light pattern emitter is moveable at the same time by the same distance (path length). In an embodiment, each light pattern emitter is moveable at the same time by 10° along a circular path, particularly by 10° along the circumference of the inspection area. In an embodiment, each light pattern emitter is moveable at the same time by 30° along a circular path, particularly by 30° along the circumference of the inspection area. In an embodiment, each light pattern emitter is moveable at the same time by 45° along a circular path, particularly by 45° along the circumference of the inspection area. In an embodiment, each light pattern emitter is moveable at the same time by 60° along a circular path, particularly by 60° along the circumference of the inspection area. In an embodiment, each light pattern emitter is moveable at the same time by 90° along a circular path, particularly by 90° along the circumference of the inspection area. In an embodiment, each light pattern emitter is moveable at the same time by 180° along a circular path, particularly by 180° along the circumference of the inspection area.

In an embodiment, the optical system comprises a first light pattern emitter arranged at a first predetermined location at the inspection area, wherein the first light pattern emitter is arranged and configured to emit the first source light pattern towards a first section of the inspection area such that the first source light pattern is projected on a first examination region of the surface of the cable portion and that a relating first reflected data set is receivable, and wherein the optical system comprises a second light pattern emitter arranged at a second predetermined location at the inspection area, wherein the second light pattern emitter is arranged and configured to emit the second source light pattern towards a second section of the inspection area such that the second source light pattern is projected on a second examination region of the surface of the cable portion and that a relating second reflected data set is receivable.

An advantage can be that multiple examination region of the surface of the cable portion can be investigated simultaneously. An advantage can be that multiple examination region of the surface of the cable portion accessible from different viewing angles can be investigated simultaneously. The duration of the inspection process can be reduced. The overall process can be accelerated.

In an embodiment, the inspection system can be arranged and configured such that redundant information (relating to the same viewing angle) can be obtained by a first pair comprising a first pattern emitter and a first optical receiver and by a second pair comprising a second pattern emitter and a second optical receiver. An advantage can be that the accuracy can be increased.

In an embodiment, the analysis device is configured to receive a first reflection data set associated with a first angle and a second reflection data set associated with a second angle and to determine a merged three-dimensional profile of the cable portion based on the first reflection data set and the second reflection data set,
wherein the first angle is associated with the first position of the optical system relative to the cable holder and/or a first predetermined location of a first light pattern emitter at the inspection area, and
wherein the second angle is associated with the second position of the optical system relative to the cable holder and/or a second predetermined location of a second light pattern emitter at the inspection area.

The first angle can be associated with the light pattern emitter when the optical system is arranged in the first position. The second angle can be associated with the light pattern emitter when the optical system is arranged in the second position.

The first angle can be associated with the optical receiver when the optical system is arranged in the first position. The second angle can be associated with the optical receiver when the optical system is arranged in the second position.

The first angle and/or the second angle can describe the viewing angle of the optical system on the cable holder, particularly on the cable portion held by the holder. For instance, the first angle can relate to a top view. The second angle can relate to a bottom view. The second angle can relate to a side view.

An advantage can be that data from different viewing angles can be determined and considered for the reconstruction of the 3D profile.

In an embodiment, the optical system is configured and arranged such with regard to the cable holder that the emitted 2D light pattern can be projected on the entire viewable surface of the cable portion (viewable from the relating position of the optical system).

The first angle can describe a location of the optical system on a circular path, particularly on the circumference of the inspection area. The second angle can describe a location of the optical system on a circular path, particularly on the circumference of the inspection area.

In an embodiment, the first reflection data set and the second reflection data set can be received at the same time. In an embodiment, the first reflection data set and the second reflection data set can be received one after the other.

An advantage can be that multiple examination region of the surface of the cable portion can be investigated simultaneously. The duration of the inspection process can be reduced.

In an embodiment, the optical system can be movable on a circular path. The optical system can be moved along the circumference of the inspection area in a circular manner.

The first angle can relate to the circular path (particularly the circumference of the inspection area) on which the optical system can be moved (rotate). The second angle can relate to the circular path (particularly the circumference of the inspection area) on which the optical system can be moved (rotate).

In an embodiment, the optical system can be moved by 5° on the circular path from the first position to the second position. In an embodiment, the optical system can be moved by 10° on the circular path from the first position to the second position. In an embodiment, the optical system can be moved by 20° on the circular path from the first position to the second position. In an embodiment, the optical system can be moved by 30° on the circular path from the first position to the second position. In an embodiment, the optical system can be moved by 45° on the circular path from the first position to the second position. In an embodiment, the optical system can be moved by 60° on the circular path from the first position to the second position. In an embodiment, the optical system can be moved by 90° on the circular path from the first position to the second position. In an embodiment, the optical system can be moved by 180° on the circular path from the first position to the second position. In an embodiment, the optical system can be moved by 270° on the circular path from the first position to the second position.

In an embodiment, the inspection system inspection system can comprise a first light pattern emitter (first projector) and a second light pattern emitter (second projector) that are arranged with an offset to each other (e.g. an offset of 30° or 45° or 90° or 180°). In an embodiment, the first light pattern emitter and the second light pattern emitter that are arranged with an offset to each other can be rotated simultaneously by the same distance.

The offset can be the distance between the first predetermined location and the second predetermined location.

An advantage can be that a plurality of reflection data sets associated with different angles can be detected at the same time.

In an embodiment, the optical receiver is configured to collect a two-dimensional optical image of the cable portion, when the cable portion is arranged in the inspection area.

In an embodiment, the optical receiver is configured to collect a two-dimensional optical image of the surface of the cable portion, when the cable portion is arranged in the inspection area.

In an embodiment, the optical receiver is configured for simultaneous collection of the two-dimensional image and the reflection data set. The optical camera can be used for 2D and 3D data collection.

Advantageously, the optical receiver can be used for collecting different types of data, particularly different types of data each used for the inspection of the cable portion.

In an embodiment, the analysis device is configured to include data derived from the two-dimensional image in the reconstruction of the 3D profile. Two-dimensional image can improve the 3D reconstruction.

In an embodiment, the analysis device is configured to determine at least one further characteristic of the cable portion based on the two-dimensional image.

In an embodiment, the analysis device is configured to additionally include information derived from the two-dimensional image for determining the at least one characteristic of the cable portion based on the three-dimensional profile.

In an embodiment, the analysis device is configured to determine at least one further characteristic of the cable portion based on the two-dimensional image, and to additionally include information derived from the two-dimensional image for determining the at least one characteristic of the cable portion based on the three-dimensional profile.

The inspection of the cable portion can be improved by considering different types of data. In an embodiment, the modification of the cable can be identified based on the two-dimensional image.

In an embodiment, the characteristic of the cable portion and/or the further characteristic of the cable portion is one of: a width of the cable portion, a height of the cable portion, a quality of a processing, a symmetry measure, a shape measure, a compression rate, a position of a modifier on the cable, a width of a modifier, a height of a modifier, a number of missing strands, a position of a crimp, a position of a seal, a position of a plug, a position of a tape, a position of a housing, a crimp force, a damage indicator, or a contamination indicator.

A modifier can be a crimp, a seal, a plug, a tape and/or a housing. A modifier can be a ferrule and/or a terminal. The modifier can be a label, e.g. an adhesive label. The modifier can comprise an identifier. The identifier can be a barcode and/or data matrix and/or a QR Code. The modifier can be a barcode and/or data matrix and/or a QR Code. The barcode and/or data matrix and/or a QR Code can be applied directly to the cable. The barcode and/or data matrix and/or a QR Code can be attached to the cable via an adhesive label.

The identifier, particularly the barcode and/or the data matrix and/or the QR Code, can be recorded by the optical receiver. The identifier, particularly the barcode and/or the data matrix and/or the QR Code, can be detected by the optical receiver. The identifier, particularly the barcode and/or the data matrix and/or the QR Code, can be read by the optical receiver. The identifier, particularly the barcode and/or the data matrix and/or the QR Code, can be captured on the two-dimensional image.

In an embodiment, the label and/or the identifier and/or the barcode and/or the data matrix and/or the QR Code can be used for tracking of the respective cable. In an embodiment, the analysis device can link the characteristics of the cable and/or quality of the cable processing with the identifier. An advantage can be that a separate scanner for tracking is not required. This can reduce the costs. In an embodiment, the analysis device can be configured to initiate a sorting-out, if a failure is detected. The sorting-out can be monitored considering the identifier.

The inspection system can be configured for monitoring the processing quality, e.g. the crimp quality. The quality of the processing process can be determined based on the determined characteristic.

The characteristic of the cable portion (and/or the further characteristic) can be a geometrical parameter of the cable portion determined from the 3D data.

An advantage can be that the inspection system can be configured for non-destructive quality control. After inspection, the particular cable can be further used in downstream processes.

The inspection system can be configured to scan cables with multiple layers and/or components (modifiers), for example, coaxial cables, single or multi-core cables with jacket-, foil-, shield- and/or conductor-insulation-layers. These types of cables can be equipped with at least one modifier. Modifiers can be seals, crimps, plugs, ferrules, tapes, connector housings, etc. Their position in relation to the various cable-layers can be scanned and be analysed by the inspection system.

In an embodiment, the inspection system is configured such that the optical system and the cable holder remain in a fixed stationary angle to each other, when the two-dimensional structured source light pattern is emitted and the reflected two-dimensional light pattern is received, wherein the fixed stationary angle is associated with the position of the optical system relative to the cable holder, and/or the predetermined location of the light pattern emitter at the inspection area.

The optical system and the cable holder can remain in a fixed viewing angle relative to each other during projection of the two-dimensional structured source light pattern and reception of the reflected two-dimensional light pattern (data acquisition).

The inspection system can be configured such that the optical system and the cable holder remain in a fixed relative position to each other, when the two-dimensional structured source light pattern is emitted and the reflected two-dimensional light pattern is received.

In an embodiment, the inspection system is configured such that no relative motion between the cable holder and the optical system occurs during projection of the 2D pattern and data acquisition. In an embodiment, the inspection system is configured such that during projection of the source light pattern and reception of the reflected light pattern, the cable holder and the optical system remain in a fixed relative position to each other. In an embodiment, only data collected during a fixed relative position is taken into account in the determination of the three-dimensional profile. In an embodiment, the rotation is the "stop and go"-rotation, wherein data acquisition only takes place at stop. In particular, in an embodiment the rotation of the cable holder and/or the optical system is only to have a new angle (e.g. from first position to second position), but rotation is not required for the scanning process itself.

In an embodiment, the analysis device is configured to determine the three-dimensional profile of the cable portion based on the received reflection data in the first position and the received reflection data in the second position and/or wherein no data is generated during the transition between the first position and the second position and/or wherein data generated during the transition between the first position and the second position is not considered for determination of the three-dimensional profile.

In an embodiment, the optical system is configured for obtaining, from a stationary first angle, a first reflection data set associated with the first angle and indicative of a three-dimensional partial surface profile of the cable portion.

An advantage can be that data is collected when the optical system stands still relative to the cable holder, particularly the cable portion. Advantageously, the actual measurement is not affected by a movement, such that the measurement can be more accurate.

In an embodiment, the inspection system is configured for real-time inspection of the cable portion. In an embodiment, the inspection system is configured to provide the determined at least one characteristic of the cable portion to a downstream device, particularly for a further processing step, such that the at least one characteristic of the cable portion is present at the downstream device when required.

In an embodiment, the analysis device is configured to determine a three-dimensional profile of the cable portion while the cable portion is still arranged in an inspection area.

In an embodiment, the inspection system is configured to begin the reconstruction of the 3D profile during data acquisition.

An advantage can be that the inspection is not the time-limiting step of the overall processing process. An advantage can be that the duration of the overall processing process is only slightly affected by the additional inspection process.

In an embodiment, the inspection system further comprises a communication unit configured for communication with a data network and to provide the reflection data set and/or the three-dimensional profile of the cable portion and/or at least one characteristic of the cable portion to the data network.

In an embodiment, the inspection system further comprises a communication unit configured for communication with an external storage device and to provide the reflection data set and/or the three-dimensional profile of the cable portion and/or at least one characteristic of the cable portion to external storage device.

In an embodiment, the communication unit can transmit the reflection data set to the data network. In an embodiment, the communication unit can transmit the reflection data set to the external storage device. In an embodiment, the communication unit can transmit the three-dimensional profile of the cable portion to the data network. In an embodiment, the communication unit can transmit the three-dimensional profile of the cable portion to the external storage device. In an embodiment, the communication unit can transmit at least one characteristic of the cable portion to the data network. In an embodiment, the communication unit can transmit at least one characteristic of the cable portion to the external storage device.

In an embodiment, the communication unit is configured to provide the reflection data set and the three-dimensional profile of the cable portion and at least one characteristic of the cable portion to the data network. In an embodiment, the communication unit is configured to provide the reflection data set and the three-dimensional profile of the cable portion and at least one characteristic of the cable portion to the external storage device.

The communication unit can be configured for communication with the internet and/or with a cloud.

The inspection system, particularly the analysis system, can connect to a network (LAN, cloud), particularly for information transfer. The inspection system, particularly the analysis system, can communicate with other devices and/or software, particularly for information transfer. The communication unit can be configured for the respective communication. The communication unit can be configured to connect and/or publish information (such as processing analysis results, measurement, data points) to the network.

In an embodiment, a wireless communication can be considered. A wireless communication can be via Wifi and/or Bluetooth and/or Near Field Communication (NFC).

In an embodiment, the light pattern emitter and the optical receiver are fixed at a support structure arranged around the inspection area, wherein the support structure is rotatable around the inspection area.

In an embodiment, the inspection system further comprises a motor device configured for driving the support structure. In an embodiment, the inspection system further comprises a motor device configured for rotating the support structure.

In an embodiment, the motor device comprises an encoder encoding the position of the optical system with respect to the cable holder. In an embodiment, the motor device comprises an encoder encoding the angle of the optical system with respect to the cable holder. In an embodiment, the motor device comprises an encoder encoding the viewing angle of the optical system with respect to the cable holder. In an embodiment, the motor device comprises an encoder encoding the position of the optical system with respect to the cable holder and encoding the angle of the optical system with respect to the cable holder.

In an embodiment, the encoder is a resolver. In an embodiment, the encoder is a digital resolver. In an embodiment, the encoder is a rotary encoder. In an embodiment, the encoder is an incremental encoder. In an embodiment, the encoder is an absolute encoder.

In an embodiment, the support structure can comprise or consist of a ring rail. In an embodiment, the support structure can comprise or consist of a turntable.

The optical system can be attached to the support structure. An advantage can be that the distance between the optical system and the centre of the inspection area can be kept constant, particularly even if the optical system is rotated. The light pattern emitter and the optical receiver can be arranged such with regard to the inspection area (e.g. the centre) that focal length is kept constant. An advantage can be that the data acquisition can be improved, in particular when the cable portion is positioned centrally in the inspection area.

In an embodiment, the support structure can delimit the inspection area. The inspection area can be arranged in an opening, particularly a through-opening, of the support structure.

The motor device can comprise a servomotor. The motor device can be configured for rotating the support structure around the rotation axis.

The support structure can be driven via a gear drive mechanism. The support structure can be driven via a toothed-belt-mechanism.

The encoder can encode the position of the support structure by the angle of rotation of the support structure. The encoder can encode the position of the optical system via the position of the support structure with respect to the cable holder. The encoder can encode the position of the optical system via the position of the support structure with respect to the cable holder with regard to inspection area.

The encoder can be configured to encode the direction of the rotation (e.g. clockwise, anti-clockwise). The encoder can be configured to encode the first angle. The encoder can be configured to encode the second angle.

In an embodiment, the cable holder is arranged and configured to move the cable portion into the inspection area. In an embodiment, the cable holder is arranged and configured to move the cable portion out of the inspection area. In an embodiment, the cable holder is arranged and configured to move the cable portion through the inspection area along a longitudinal direction of the cable. In an embodiment, the cable holder is arranged and configured to rotate the cable portion within the inspection area.

In an embodiment, the cable holder is arranged and configured to move the cable portion into the inspection area and to move the cable portion out of the inspection area.

In an embodiment, the cable holder is arranged and configured to move the cable portion into the inspection area and to move the cable portion out of the inspection area and to rotate the cable portion within the inspection area.

In an embodiment, the cable holder is arranged and configured to move the cable portion through the inspection area perpendicular to an inspection plane spanned by the light emitters. In an embodiment, the cable holder is arranged and configured to move the cable portion through the inspection area perpendicular to an inspection plane spanned by the support device.

In an embodiment, the cable holder is arranged and configured to rotate the cable portion around the longitudinal axis of cable.

The cable holder can be mounted on a linear actuator. The cable holder can comprise a linear actuator. The linear actuator can be arranged and configured to move the cable holder back and/or forth.

The cable holder can be configured to for rotational movement. In an embodiment, the cable holder is rotatable by 5°. In an embodiment, the cable holder is rotatable by 10°. In an embodiment, the cable holder is rotatable by 30°. In an embodiment, the cable holder is rotatable by 45°. In an embodiment, the cable holder is rotatable by 60°. In an embodiment, the cable holder is rotatable by 90°. In an embodiment, the cable holder is rotatable by 180°. In an embodiment, the cable holder is rotatable by 270°. In an embodiment, the cable holder is rotatable by 360°. The cable holder can be rotated successively multiple times. In an embodiment, the cable holder can be configured for repeated successive rotational movement. In an embodiment, cable holder can be rotated successively multiple times by the same angle. In an embodiment, the cable holder is reversibly rotatable.

In an embodiment, the processed cable (e.g. the crimped wire) can be held by a gripper capable of rotating 360 degrees on a sliding table.

The cable holder can be operated by a motorised rotational table, particularly by a motor-driven rotational table. It can be arranged and configured for executing a complete and precise rotation at high velocities. This assembly can be fixed to a mounting bracket. The mounting bracket can be attached to the linear actuator stage. The cable holder can be configured for the precise positioning of the processed cable to its specified positions.

In an embodiment, the cable holder can move the cable from a starting position through the inspection area to a processing module and after processing of the cable portion by the processing module into the inspection area for inspection.

The cable holder can be configured to align the cable portion in the inspection area. Upon alignment, the cable holder can initiate a rotation sequence, enabling the high-speed camera to capture data points of the surface of the cable portion during the 360-degree rotation, particularly during different stops of the 360-degree rotation. The optical system can be stationary.

A second aspect of the invention relates to a cable processing system, comprising a cable processing module configured for processing of a cable portion, and the inspection system according to the invention, wherein the inspection system is arranged downstream of the cable processing module and configured to inspect the cable portion of a processed cable processed by the cable processing module.

In an embodiment, the inspection area and the cable processing module are arranged and configured for in-line inspection of the processed cable by the inspection system.

The cable gripper can be driven through the inspection system to the cable processing module behind it. An advantage can be that this can save cycle time.

In an embodiment, the cable-processing module arranged besides the inspection system, particularly besides the inspection area. In an embodiment, the cable-processing module arranged next to the inspection system, particularly next to the inspection area.

In an embodiment, the cable processing system is arranged in an in-line arrangement. In an embodiment, the cable processing system is configured such that the processed cable is transferable to the downstream processing module only after passing the inspection system.

In an embodiment, the cable processing system is arranged in a stand-alone arrangement. The inspection system can be arranged independent of the processing module.

In an embodiment, the cable processing system can comprise a plurality of processing modules. In an embodiment, the cable processing system can comprise a plurality of inspection systems. In an embodiment, the cable processing system comprises a plurality of processing modules and one inspection system, particularly wherein the inspection system is configured to inspect the processing mediated by the plurality of processing modules. In an embodiment, the cable processing system comprises a plurality of processing modules and a plurality of inspection system, particularly wherein each inspection system is configured to inspect the processing mediated by a relating processing module.

In an embodiment, the cable processing system can be arranged and configured such that each processed cable can be inspected.

An advantage can be that failures can be detected quickly and the corresponding erroneous processed cables can be sorted out without delay.

If necessary, possible settings of the processing module can be adjusted accordingly in order to avoid the detected failures in subsequent cables. An advantage can be that this can be done even after the failures has been detected on one processed cable. The waste can advantageously be reduced. An advantage can be that the process control can be improved.

In an embodiment, each one inspection system can be arranged downstream of each one processing unit.

In an embodiment, the inspection area is arranged between the cable processing module and the cable holder, wherein the cable holder is configured to move the cable portion through the inspection area and provide the cable portion to the cable processing module and to remove the cable portion from the cable processing module and arrange the cable portion in the inspection area.

In an embodiment, the cable can be moved through the inspection system into and out of the processing module.

The cable holder can be configured to move the cable portion through the inspection area along the longitudinal direction of the cable. The cable holder can be configured to move the cable portion through the interior space of the inspection chamber.

In an embodiment, the cable processing module is configured for crimping and/or coaxial cable processing and/or multi-layer cable processing and/or multi-core cable processing and/or ribbon cable processing and/or welding and/or splicing and/or terminal insertion.

In an embodiment, the cable processing module is configured for crimping. In an embodiment, the cable processing module is configured for coaxial cable processing. In an embodiment, the cable processing module is configured for multi-layer cable processing. In an embodiment, the cable processing module is configured for multi-core cable processing. In an embodiment, the cable processing module is configured for ribbon cable processing. In an embodiment, the cable processing module is configured for welding. In an embodiment, the cable processing module is configured for splicing. In an embodiment, the cable processing module is configured for terminal insertion.

A further aspect of the invention relates to a method for optical inspection of a cable portion of a processed cable, comprising
- providing the inspection system according to the invention and/or a cable processing system according to the invention,
- arranging the cable portion of the processed cable in the inspection area,
- emitting the two-dimensional structured source light pattern by the light pattern emitter towards the inspection area such that the two-dimensional structured source light pattern is projected on and reflected by the surface of the cable portion,
- receiving the reflected two-dimensional light pattern by the optical receiver,
- determining by the analysis device the three-dimensional profile of the cable portion based on the received reflection data set, and
- determining by the analysis device at least one characteristic of the cable portion based on the three-dimensional profile.

An advantage can be that the method is an optical non-destructive method. The waste can be reduced. An advantage can be that if no failure is detected, the respective inspected processed cable can be used in the downstream process. An advantage can be that if a failure is detected, this is immediately detected and, if necessary, the processing module can be adjusted such that no additional scrap is produced but the processing processes can be adjusted directly. Advantageously, downtimes can be reduced.

Analysis of the processed cable can also be used to monitor the processing tool mediating the respective processing of the cable. The inspection method can be used for monitoring of processing tools.

In an embodiment, the method further comprises
- arranging the optical system and the cable holder in a first position relative to each other,
- emitting the two-dimensional structured source light pattern and receiving the reflected two-dimensional light pattern indicative for the first position,
- rotating the optical system and/or the cable holder relative to each other,
- when the optical system and the cable holder are in the second position, emitting the two-dimensional structured source light pattern and receiving the reflected two-dimensional light pattern indicative for the second position,
- determining by the analysis device the three-dimensional profile of the cable portion based on the received reflection data set indicative of the first position and the received reflection data set indicative of the second position.

The analysis device can be configured to generates the 3D profile of surface of the cable portion relating to the first position. The processed wire (via the cable holder) and/or the optical system (camera and projector) can be rotated. In the second position, the reflection data set indicative of the second position can be received. Via this step, the 3D profile of another surface of the cable portion can be obtained. The analysis device can be configured to generates the 3D profile of surface of the cable portion relating to the second position. The analysis device can combine the received date with regard to the different positions (first position, second position). The process can be repeated until adequate information is gathered, whereinafter the software and/or the analysis device and/or a remote device can combine the data relating to the different positions/angles to generate a complete 3D profile of the cable portion.

An advantage can be that data collection occurs during stable arrangement of the cable portion and the optical system relative to each other. In an embodiment, during data collection, no relative motion is required. An advantage can be that inaccuracies due to (relative) movements can be reduced.

The system and/or the method can be configured for real-time, non-destructive inspection and/or monitoring of a processing process. The system and/or the method can be configured for real-time, non-destructive monitoring of the processing quality. The system and/or the method can use a signal transmitting source (projector) and a signal receiver (camera) to reconstruct and generate a 3D profile of the processed cable. Data of generated the 3D and a vision profile can be used for real-time analysis of the processing quality. The inspection system and the relating inspection method can be used for monitoring of processing tools.

Further features and embodiments of the present invention are described in the following with reference to the Figures, wherein:
- Fig. 1: shows a perspective view of an embodiment of an inspection system comprising one optical system,
- Fig. 2: shows a perspective view of an embodiment of an inspection system comprising four light pattern emitters,
- Fig. 3: shows a perspective front view of an embodiment of an inspection system comprising two light pattern emitters,
- Fig. 4: shows a perspective back view of an embodiment of an inspection system,
- Fig. 5: shows a sectional view of an embodiment of an inspection system (along line A-A in Fig. 3),
- Fig. 6: shows a schematic illustration of an optical system,
- Fig. 7: shows a schematic representation of an embodiment of a cable processing system,
- Fig. 8: shows key parameters (Fig. 8A) and exemplary failures of a cable portion (Figs 8B to 8D), and
- Fig. 9: shows schematic exemplary embodiments and/or modifications of a cable portion.

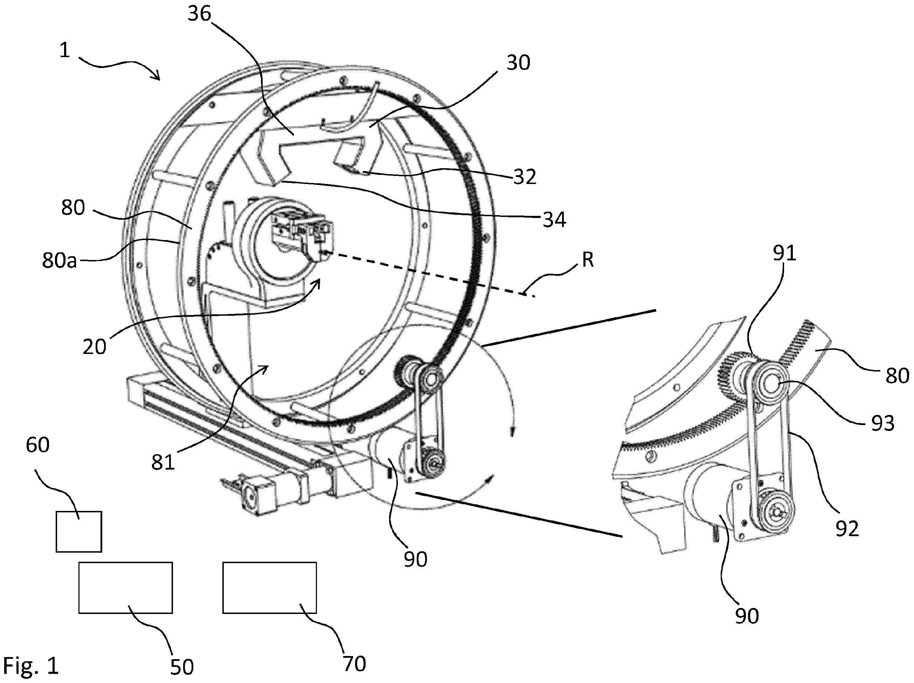

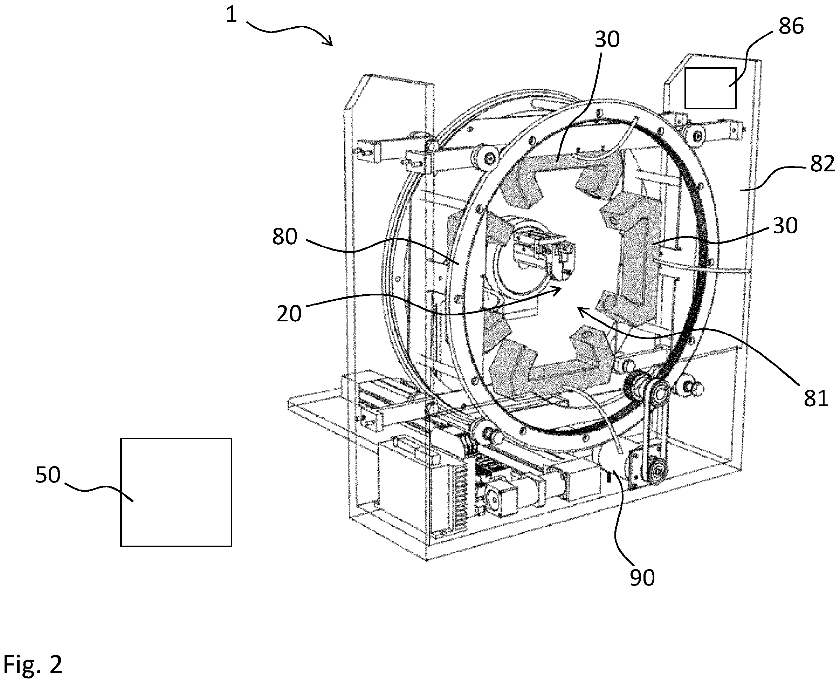

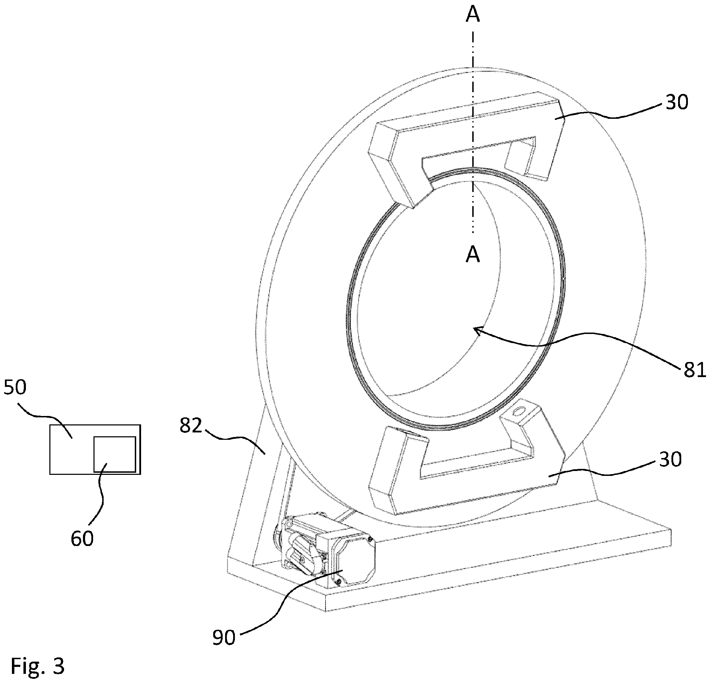

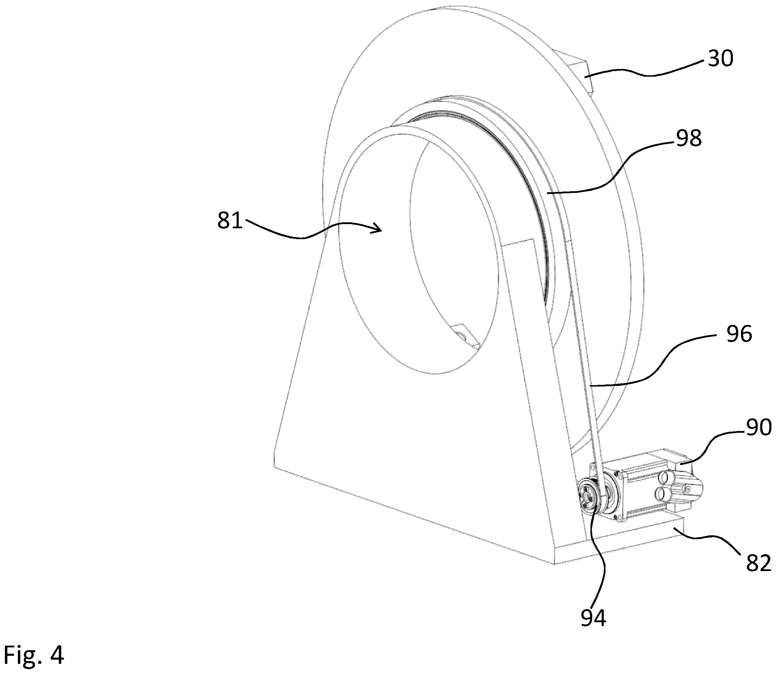

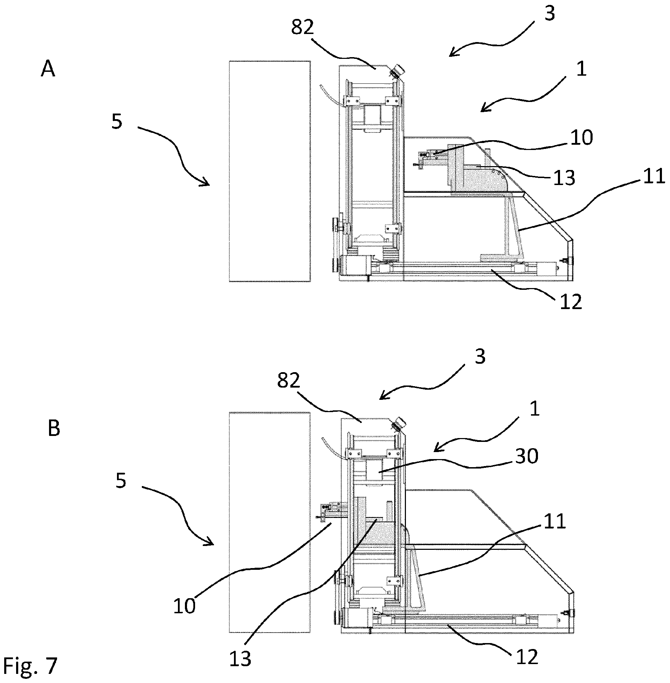

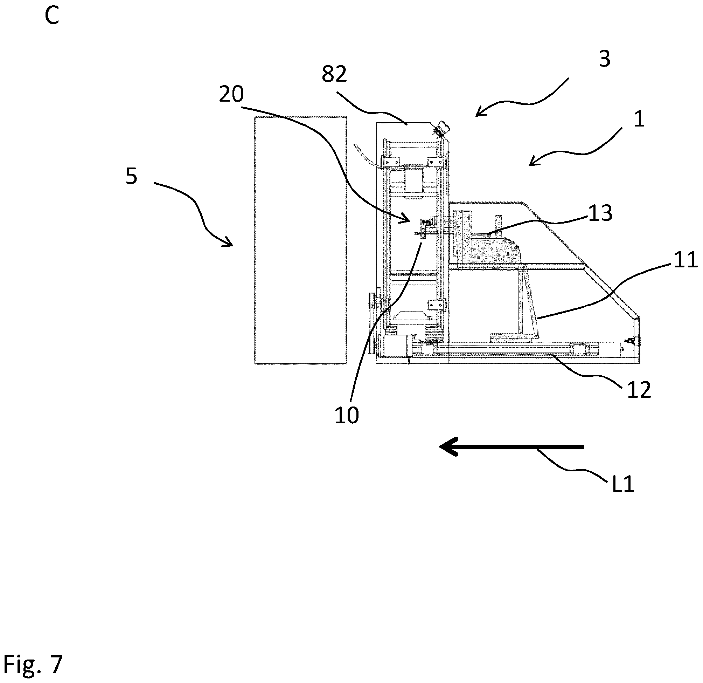

In Figures 1 and 2 embodiments of inspection systems 1 are shown. In Figures 3 and 4 different views of a further embodiment of a support structure 80 supporting the optical system 30 are shown. In Figure 7, an embodiment of a cable processing system 3 comprising an inspection system 1 is illustrated.

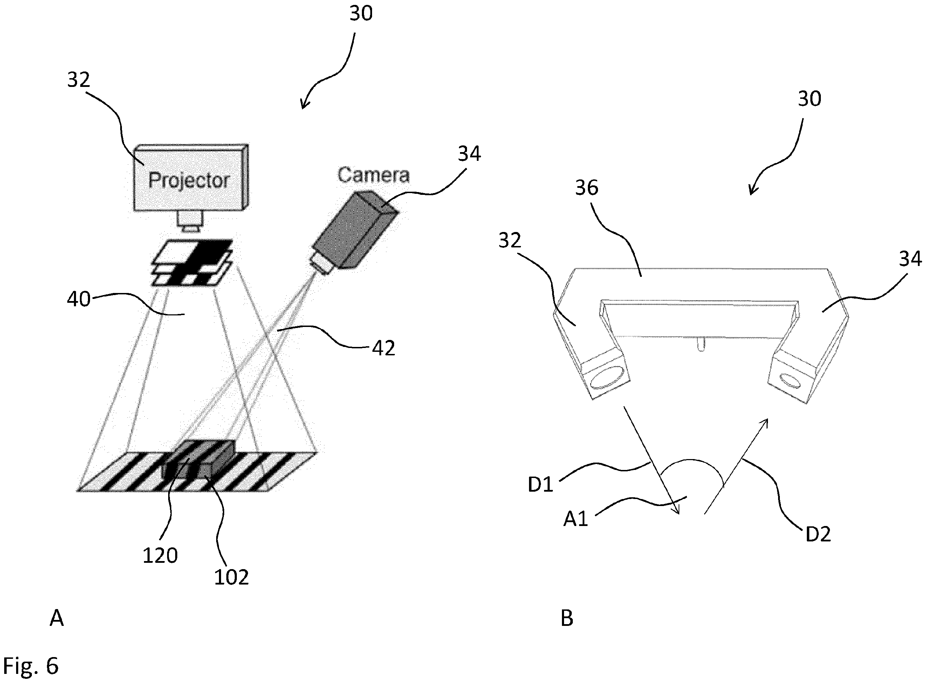

The inspection system 1 can comprise a cable holder 10. The inspection system 1 can comprise an optical system 30. The optical system 30 can comprise a light pattern emitter 32 and an optical receiver 34 (also see Fig. 6). The optical system 30 can be arranged at a support structure 80. The support structure 80 can comprise or define a through-opening 81, particularly wherein the inspection area 20 is located in the through-opening 81. The support structure 80 can delimit the inspection area 20. The support structure 80 can surround the inspection area 20. In the illustrated embodiments, the support structure 80 is movable, particularly rotatable, around the inspection area 20. The support structure 80 can be driven by a motor device 90.

The support structure 80 can have a circular shape. The support structure 80 can comprise or consists of a ring rail assembly 80a (see Figs 1 and 2). The ring rail assembly 80a can comprise a dual-edged V-ring rail. The ring rail assembly 80a can comprise a single-edged V-ring rail with an external gear. The ring rail assembly 80a can comprise a one side mounted V-shaped bearing. The support structure can comprise or consist of a floating ring track. The floating ring track can be designed for seamless and accurate operation. The support structure 80 can comprise or consists of a turntable 80b (see Figs 3 and 4). The support structure 80 can comprise or consists of a rotatable disc 80b (see Figs 3 and 4).

The support structure 80 can be arranged in a housing 82. The support structure 80 can be arranged in a frame 82. The frame 82 can support the support structure 80. A guiding structure 84 (e.g. bearing, pulley) can be fixed at the frame 82. The guiding structure 84 can be configured and arranged to guide the rotation of the support structure 80. An advantage can be that the guiding structure 84 can provide assistance to the movement of the support structure 80 (and the associated movement of the optical system 30). For instance, the play of the support structure 80 can be reduced.

The inspection system 1 can comprise a human-machine-interface (HMI) 86. The HMI 86 can be arranged at the housing and/or at the frame 82. The HMI 86 can serve as the central hub of the software interfaces with the control system for processing operations. The HMI can be the critical point where interaction between the system's software and its control processes take place. The HMI 86 can be operatively connected with the analysis device 50.

The optical system 30 can be arranged at the support structure 80, 80a, 80b. Assembled on the support structure 80 the projector and/or the camera can be correctly positioned to enable a full 360-degree rotation while maintaining a constant focal length, particularly ensuring optimal scanning when the item (the processed cable) is positioned centrally in the inspection area. The rotation axis R can extend through the centre of the inspection area 20.

The cable holder 10 can be configured to hold a cable 100. The cable holder 10 can be arranged and configured to insert a cable portion 102 (of the cable 100) into the inspection area 20. The cable holder 10 can be arranged and configured to hold the cable portion 102 in the inspection area 20 (also see Fig. 7).

The cable holder 10 can comprise an actuator stage 12. The cable holder 10 can be arranged at an actuator stage 12. The actuator stage 12 can be a linear actuator stage. The actuator stage 12 can mediate a translational movement, particularly along longitudinal direction L1 (also see Fig. 7). The actuator stage 12 can be arranged and configured to move the cable 100 held by the cable holder 10 into the inspection area 20. The actuator stage 12 can be arranged and configured to move the cable 100 held by the cable holder 10 out of the inspection area 20. The actuator stage 12 can be attachable to the frame 82. The actuator stage 12 can be detachable from the frame 82.

The inspection system 1 can comprise one light pattern emitter 32 and one associated optical receiver 34. The inspection system 1 can comprise more than one light pattern emitter 32 and more than one associated optical receiver 34 (Figs 2 and 3). The embodiment illustrated in Figure 3 comprises two light pattern emitters 32 and two associated optical receiver 34. The two light pattern emitters 32 are arranged with an offset of 180° to each other. The embodiment illustrated in Figure 2 comprises four light pattern emitters 32 and four associated optical receiver 34. The four light pattern emitters 32 are arranged with a respective offset of 90°.

In the embodiment illustrated in Fig. 2, multiple stationary cameras 34 can be mounted on a circular track (support structure 80) on the same diameter. The four cameras 34 can be strategically positioned at angles of 90 degrees respectively. The four cameras 34 can be positioned with an offset of 90 degrees to each other. The cable holder 10 can hold a cable and can move it horizontally into the predetermined inspection area 20. When positioned correctly the cameras 34 can proceed to scan the cable portion to collect the data points of the processed cable. In an embodiment, the inspection system can comprise three optical systems mounted on a circular track on the same diameter with an offset of 120°. An advantage can be that simultaneously four data sets can be generated. The inspection process can be accelerated.

In an embodiment, multiple cameras 34 can be mounted on a circular track (support structure 80) on the same diameter. For instance, four cameras can be arranged with an offset of 90° at the support structure 80, each with the distance to the centre of the inspection area 20. The support structure 80 with the attached optical systems 30 can be rotatable, for instance by 45°. An advantage can be that in the first position, four data sets can be generated, and in the second position (rotation by 45°) four additional data sets can be obtained. The inspection process can be accelerated.

The inspection system 1 can comprise an analysis device 50. The inspection system 1 can comprise a communication unit 60. The communication unit 60 can be comprised in the analysis device 50. The communication unit 60 can be configured for communication with the analysis device 50. The communication unit 60 can be configured for communication with an external storage device 70.

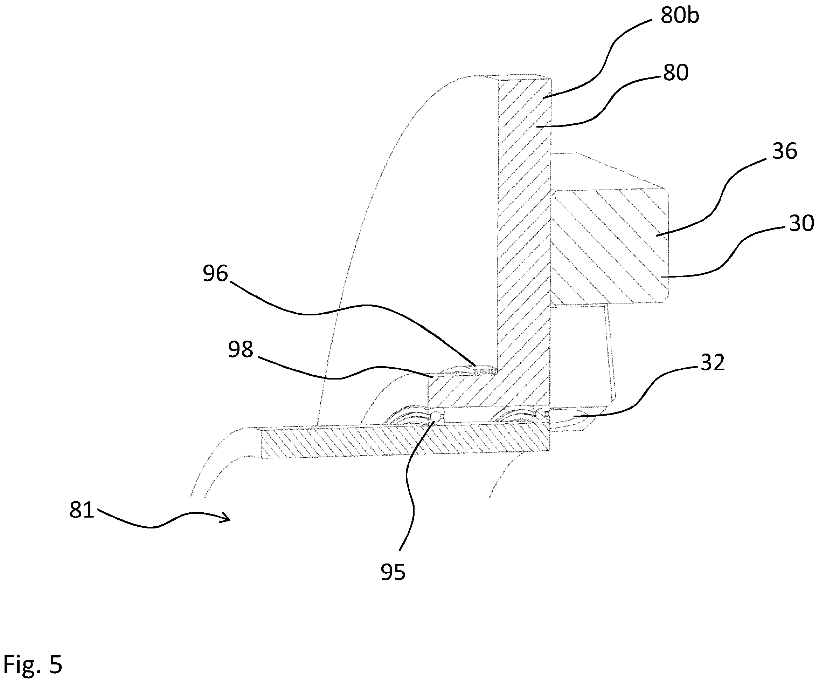

The support structure 80 can be driven via the motor device 90. The motion can be mediated by a gear drive mechanism (see Figs 1 and 2; particularly enlarged excerpt in Fig. 1). The motion can be mediated by a toothed-belt-mechanism (see Figs 3 to 5).

The gear drive mechanism (see Figs 1 and 2) can comprise spur gear 91. The gear drive mechanism can comprise a pulley system. The pulley system can operate in conjunction with a timing belt 92. The pulley system can operate in conjunction with a pulley 93. The spur gear 91 can be connected to the motor device 90. The motor device 90 can drive the support structure 80, particularly the single-edge ring rail via the external gear. The interaction between the spur gear 91 and the rear single edge ring can enable the rotational movement of the support structure 80 and the associated optical system 30. The gear drive mechanism can be configured for a smooth and precise motion.

The toothed-belt-mechanism (see Figs 3 to 5) can comprise a motor pulley 94. The toothed-belt-mechanism can comprise a drive means 96. The drive means 96 can be a timing belt. The drive means 96 can be a drive chain. The toothed-belt-mechanism can comprise a toothed ring 98. The toothed-belt-mechanism can comprise precise rotational bearings 95. The rotational bearing 95 can be a ball bearing. The rotational bearing can be a plain bearing. The motor device 90 can drive the drive means 96. The drive means 96 can be configured to interact with the toothed ring 98, particularly to transmit the motion of the drive means 96 towards the toothed ring 98.

In an embodiment, the toothed ring 98 is fixed to the support structure 80. In an embodiment, the support structure 80 comprises the toothed ring 98. The toothed ring 98 can be integrally formed with the turntable 80b.

The cable holder 10 can secure the processed cable. The processed cable can be moved horizontally by the cable holder 10 into the predetermined inspection area 20. When positioned correctly, the optical system 30 driven by the motor device 90, particularly via a gear drive mechanism or a toothed-belt-mechanism (particularly comprising a belt and a pulley), can begin to rotate. Throughout the step-wise 360 degree rotation, the high-speed camera can collect data points of the surface of the processed wire.

The optical system 30 can comprise a light pattern emitter 32. The optical system 30 can comprise an optical receiver 34 (see Figs 1 to 6). In the illustrated embodiments, the number of light pattern emitters 32 equals the number of optical receivers 34.

The optical receiver 34 can be an optical camera. The light pattern emitter 32 can be a projector.

The optical receiver 34 and the light pattern emitter 32 can be arranged at a common yoke structure 36 (see, e.g. Fig. 6B). In an embodiment, the optical system 30 is attached to the support structure 80 via the yoke structure 36 (see, e.g. Figs 1 to 5). In an embodiment, the optical receiver 34 and the light pattern emitter 32 are each attached to the support structure 80 individually. The optical receiver 34 can be housed in the yoke structure 36. The light pattern emitter 32 can be housed in the yoke structure 36.

The light pattern emitter 32 can be arranged and configured to project the two-dimensional structured source light pattern 40 towards the cable portion 102 (see particularly Fig. 6A). The light pattern emitter 32 can be configured and arranged such with respect to the cable portion 102 that the two-dimensional structured source light pattern 40 is projected on the entire surface of the cable portion 102 which faces towards the light pattern emitter 32. The entire surface of the cable portion 102 which faces towards the light pattern emitter 32 can be reached by the source light pattern 40. In the illustrated example in Figure 6A, the source light pattern 40 can extend laterally beyond the cable portion 102.

The optical receiver 34 can be arranged and configured to receive the reflected two-dimensional light pattern 42 reflected by the surface of the cable portion 102 (see particularly Fig. 6A). The optical receiver 34 can be arranged and configured such with respect to the cable portion 102 that the optical receiver 34 can receive the entire reflected two-dimensional light pattern 42 at once.

Figure 6 illustrates examples how telecentric fringe projection profilometry (FPP) system can be used to generate the point cloud of the processed cable. FPP can employ a structured lighting technique that utilizes binary patterns to generate three-dimensional range maps. The system can integrate a Digital Light Processing (DLP) projector, which projects alternating black and white striped patterns, and a monochrome digital Charged Coupled Device (CCD) camera. These components can actively engage in a stereo triangulation process. Calibration of the optical devices (projector and/or camera) can be performed to determine their intrinsic and extrinsic parameters relative to a fixed reference system. The projector can function analogously to a reverse camera, capable of producing both vertical and horizontal coded fringes.

The scanning process can employ a telecentric fringe projection profilometry system, which uses structured lighting and binary patterns to create a 3D profile. A DLP projector and a monochrome digital CCD camera can work together in stereo triangulation, projecting alternating black and white stripes onto the object (cable portion). The optical devices (projector, camera) can undergo calibration to establish their parameters, allowing the projector to emit vertical and horizontal coded fringes, similar to a reverse camera. The system can adopt a vertical binary encoded light stripe technique to reconstruct 3D profiles, casting vertical light planes with diminishing periods onto the object. The system can capture various surface positions and relays the data to the analysis device 50 (and/or the control system).

The images can be merged together using a software to form an accurate 3D profile model, which can measure the processed cable's outer profile cross-section with AI assistance. The 3D profile can be analysed in an AI-supported manner. The measurements can be compared against measurements in the database to determine the quality of the processing. The systematic process can allow an accurate and unbiased evaluation of the processing process outcomes.

In an embodiment, a vertical binary encoded light stripe method for reconstructing 3D profile is considered in the context of the inspection system 1. Specifically, a series of vertical light planes, defined by the intersection of black and white fringes with progressively halving periods, can be cast onto the object (cable portion). The camera can capture a temporal sequence of light intensities at each pixel, which can appear bright or dark based on the position within the plane.

The light pattern emitter 32 and the optical receiver 34 can be arranged with an oblique angle with regard to each other. The emission direction D1 of the light pattern emitter 32 and the receiving direction D2 of the optical receiver 34 can extend non-parallel to each other. The emission direction D1 and the receiving direction D2 can span a projection angle A1. The projection angle A1 can be smaller than 180°. The projection angle A1 can be smaller than 90°. The projection angle A1 can be an acute angle.

The source light pattern 40 can comprise a plurality of parallel light stripes. The source light pattern 40 and the reflected light pattern 42 can differ from each other. The surface of the cable portion 102 can cause a perspective distortion of the light pattern. Relating the reflected light pattern 42 to the source light pattern 40, particularly detecting the distortion, can provide information about the shape of the cable portion 102. Relating the reflected light pattern 42 to the source light pattern 40, particularly detecting the distortion, can provide a 3D profile of the surface of the cable portion 102.

In Figure 7, an embodiment of a cable processing system 3 is illustrated. The illustrated cable processing system 3 can comprise an inspection system 1 and a cable processing module 5. In Figure 7A, the cable processing system 3 is illustrated with the cable holder 10 arranged in a back position. In Figure 7B, the cable processing system 3 is illustrated with the cable holder 10 arranged in a processing position. In Figure 7C, the cable processing system 3 is illustrated with the cable holder 10 arranged in an inspection position. The cable processing system 3 can be arranged behind the inspection system 1, particularly such that a cable can be moved through the inspection system 1 towards the cable processing system 3.

In the inspection position, the cable holder 10 can be arranged in the inspection area 20.

The cable holder 10 can be fixed to a mounting bracket 11. The mounting bracket 11 can be attached to the linear actuator stage 12. The cable holder 10 can comprise the mounting bracket 11. The cable holder 10 can comprise the mounting bracket 11 and the linear actuator stage 12. The cable holder 10 can be connected with a holder rotation motor 13. The holder rotation motor 13 can be configured to rotate the cable holder 10, particularly to rotate the cable, when the cable is attached to the cable holder 10.

In Figure 7, an example of the working process of the inspection system 1 (particularly of the cable processing system) is illustrated. In Figure 7A, the gripper 10 (cable holder 10) can hold the wire. The gripper 10 can be positioned on a mounting bracket 11, which is affixed to the linear actuator stage 12. At the initial step illustrated in Fig. 7A, the gripper 10 can be arranged in its starting position, particularly primed for the subsequent phase of the process. In Figure 7B, the exemplary next step is illustrated which can involve the gripper 10 feeding the assembly in the direction of the z-axis (particularly horizonal movement; particularly along the direction L1). The gripper 10 can be passed directly through the inspection area 20 of the inspection system 1, and proceeding to the processing module 5. Following the processing of the cable, the cable holder 10 can retract back through the inspection system 1, particularly such that the cable portion can be arranged in the inspection area 20, particularly for a collection of the data points of the cable portion of the processed cable. This process can advantageously ensure a meticulous examination of the processing of the cable, e.g. the assembly of the wire components.

Processed cables can be transported directly to the inspection system 1 for a three-dimensional scan.

The inspection system 1 can be capable of functioning independently. In an embodiment, the inspection system 1 can be combined with other equipment. In an embodiment, the inspection system 1 can be configured as a transfer line station. An operator can manually load the cable 100 in the cable holder 10. In an embodiment, the cable 100 is automatically attached (loaded) to the cable holder 10. In an embodiment, the cable 100 can be transported by the holder 10 between different cable processing modules 5.

The inspection system 1 can be extended to other applications such as in-line, real-time quality inspection, as an off-line quality verification device, as a scalable module integrated into a third party machine and/or any other applications that analyses cable processing profiles and/or processing quality.

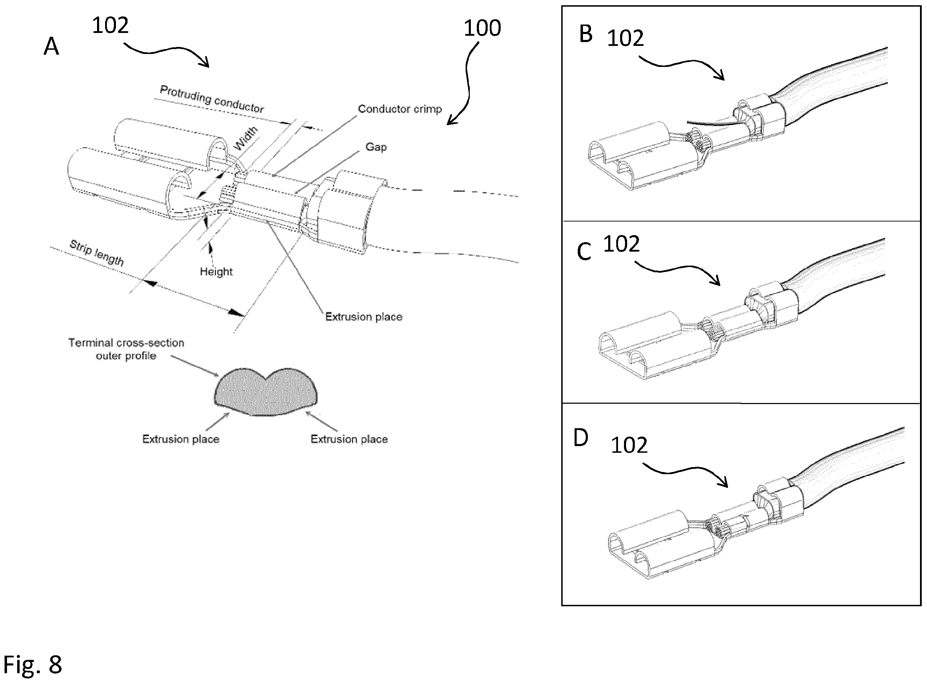

In Figure 8, different characteristics of a cable portion are illustrated, particularly for a crimped wire. For instance, the height of the crimp can be a characteristic (key parameter). In Figures 8B to 10, different embodiments of processed cables 100 are illustrated.

In Figures 8B to 8D, possible failures of the crimp are illustrated that can be detected by the inspection system during the inspection process. For instance, a protruding strand (Fig. 8B), an irregular crimp (Fig. 8C) and/or a crimp with a nicked terminal (Fig. 8D). These examples illustrate potential failures that can occur during the wire termination process, which are critical to recognise for ensuring the integrity of electrical connections. These are exemplary failures. The invention is not limited to the detection of these failures.

In an embodiment, the inspection system 1 can also scan cables with stripped, multiple layers and components. For example, coaxial cables, single or multi-core cables with jacket-, foil-, shield- and conductor insulation-layers can be analysed. The cables can then be equipped with at least one seal, terminal, connector, plug, ferrule, tape, and/or connector housing (modifier). The position of the modifier in relation to the cable-layer can be scanned and analyzed by the inspection system 1. Also a contamination with waste pieces can be determined (Fig. 10).

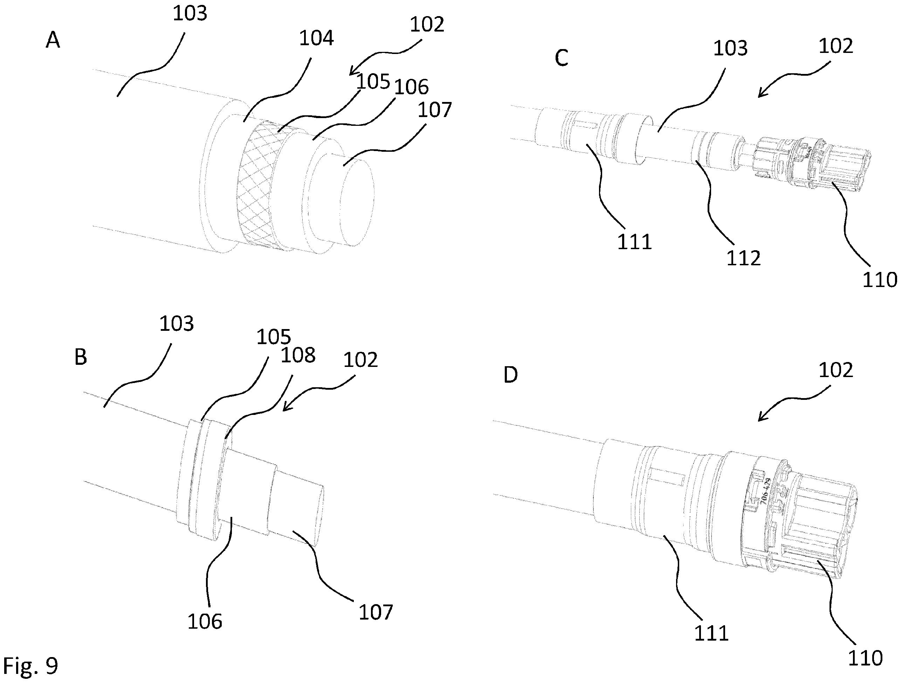

The inspection system can be configured to inspect a HV Cable 100 with several layers. The 3D profile can provide the respective length of each stripped layer (Fig. 9A). In an embodiment, the HV cable 100 can comprise a jacket (outer insulation) 103. The HV cable 100 can comprise an electric insulation foil 104. The HV cable 100 can comprise a shield 105. The illustrated HV cable 100 can comprise a conductor insulation 106. The HV cable 100 can comprise a conductor 107. The inspection system 1 can be configured to determine the position at which the respective layer is removed (e.g. with regard to each other and/or with regard to the tip).

The inspection system can be configured to inspect a HV Cable with several Layers and a Ferrule. The 3D profile (3D scan) can provide the respective length of each stripped layer and/or the position of the ferrule and/or the position of the end of the bended shield (Fig. 9B). The HV cable 100 can comprise a jacket (outer insulation) 103. A step-like ferrule 108 can be arranged at the HV cable 100. The HV cable 100 can comprise a step-like ferrule 108. The shield 105 can be arranged such that its netting is bended over the ferrule 108. The illustrated HV cable 100 can comprise a conductor insulation 106. The HV cable 100 can comprise a conductor 107.

The inspection system 1 can be configured to determine the position of the ferrule, e.g. with regard to the tip of the cable. The inspection system 1 can be configured to determine the quality of the ferrule 108 arrangement. The inspection system 1 can be configured to determine the quality of the netting arrangement.

The inspection system can be configured to inspect a HV Cable with several layers and components. The 3D profile can provide the respective length of each layer and/or the position of tape and/or the position of the ferrule and/or the position of the contact plug (Fig. 9C).

A contact plug 110 can be attached to the cable 100. A sleeve 111 can be arranged at the cable 100. A tape 112 can be attached to the cable 100. The tape 112 can bind the underlaying end of the shield to the cable jacket.

The inspection system can be configured to inspect a HV Cable with several layers and components, sleeve 111 in place (Fig 9D). The 3D profile can provide the overall length of the combination of the sleeve 111 and contact plug 110, and/or their rotational position to each other.

The inspection system can be configured to inspect a HV Cable with several errors (failures). The 3D profile can provide information to contamination, for example strands, too long shield netting, foil leftovers and/or part numbers as 3D information and/or 2D information.

## Claims

1. An inspection system (1) for optical inspection of a cable portion (102) of a processed cable (100), the inspection system comprising:
- a cable holder (10) configured for holding the processed cable (100) such that the cable portion (102) is arranged in an inspection area (20) of the inspection system (1),
- an optical system (30) comprising a light pattern emitter (32) and an optical receiver (34),
wherein the light pattern emitter (32) is configured and arranged to emit a two-dimensional structured source light pattern (40) towards the inspection area (20) such that the two-dimensional structured source light pattern (40) is projected on and reflected by a surface (120) of the cable portion (102), when the cable portion (102) is arranged in the inspection area (20), such that a reflected two-dimensional light pattern (42) is reflected by the surface (120) of the cable portion (102),
wherein the optical receiver (34) is arranged and configured to receive the reflected two-dimensional light pattern (42),
- an analysis device (50) communicatively connected with the optical system (30), wherein the analysis device (50) is configured to receive a reflection data set from the optical system (30), wherein the reflection data set is indicative of the reflected two-dimensional light pattern (42),
wherein the analysis device (50) is configured to determine a three-dimensional profile of the cable portion (102) based on the received reflection data set,
wherein the analysis device (50) is configured to determine at least one characteristic of the cable portion (102) based on the three-dimensional profile.

2. The inspection system (1) of claim 1, wherein the optical system (30) and the cable holder (10) are arrangeable in a first position relative to each other and arrangeable in a second position relative to each other,
particularly wherein the cable holder (10) and/or the optical system (30) are rotatable relative to each other from the first position to the second position.

3. The inspection system (1) of claim 1 or 2, wherein the optical system (30) comprises a plurality of light pattern emitters (32) wherein each light pattern emitter (32) is arranged at a predetermined location at the inspection area (20), wherein each light pattern emitter (32) of the plurality of light pattern emitters (32) is arranged and configured to emit the respective source light pattern towards a respective section of the inspection area (20) such that the respective source light pattern is projected on a respective examination region of the surface of the cable portion, and that for each light pattern emitter the relating reflected data set is receivable.

4. The inspection system of claim 2 or 3, wherein the analysis device (50) is configured to receive a first reflection data set associated with a first angle and a second reflection data set associated with a second angle and to determine a merged three-dimensional profile of the cable portion based on the first reflection data set and the second reflection data set,
wherein the first angle is associated with the first position of the optical system (30) relative to the cable holder (10), and/or a first predetermined location of a first light pattern emitter (32) at the inspection area (20), and
wherein the second angle is associated with the second position of the optical system (30) relative to the cable holder (10) and/or a second predetermined location of a second light pattern emitter (32) at the inspection area (20).

5. The inspection system (1) of one of claims 1 to 4, wherein the optical receiver (34) is configured to collect a two-dimensional optical image of the cable portion (102), when the cable portion (102) is arranged in the inspection area (20), particularly
wherein the analysis device (50) is configured to determine at least one further characteristic of the cable portion based on the two-dimensional image, and/or to additionally include information derived from the two-dimensional image for determining the at least one characteristic of the cable portion based on the three-dimensional profile.

6. The inspection system of one of claims 1 to 5, wherein the inspection system (1) is configured such that the optical system (30) and the cable holder (10) remain in a fixed stationary angle to each other, when the two-dimensional structured source light pattern (40) is emitted and the reflected two-dimensional light pattern (42) is received, wherein the fixed stationary angle is associated with the position of the optical system (30) relative to the cable holder (10), and/or the predetermined location of the light pattern emitter (32) at the inspection area (20).

7. The inspection system of one of claims 1 to 6, wherein the inspection system is configured for real-time inspection of the cable portion, particularly wherein the inspection system is configured to provide the determined at least one characteristic of the cable portion (102) to a downstream device such that the at least one characteristic of the cable portion (102) is present at the downstream device when required.

8. The inspection system of one of claims 1 to 7, further comprising a communication unit (60) configured for communication with a data network and to provide the reflection data set and/or the three-dimensional profile of the cable portion and/or at least one characteristic of the cable portion to the data network,
and/or
for communication with an external storage device (70) and to provide the reflection data set and/or the three-dimensional profile of the cable portion and/or at least one characteristic of the cable portion to the external storage device (70).

9. The inspection system of one of claims 1 to 8, wherein the light pattern emitter (32) and the optical receiver (34) are fixed at a support structure (80) arranged around the inspection area (20), wherein the support structure (80) is rotatable around the inspection area (20), particularly wherein the inspection system further comprises a motor device (90) configured for driving the support structure (80), particularly wherein the motor device (90) comprises an encoder encoding the position and/or the angle of the optical system (30) with respect to the cable holder (10).

10. The inspection system of one of claims 1 to 9, wherein the cable holder (10) is arranged and configured to move the cable portion into the inspection area and/or out of the inspection area and/or through the inspection area along a longitudinal direction of the cable and/or to rotate the cable portion within the inspection area.

11. A cable processing system (3), comprising
- a cable processing module (5) configured for processing of a cable portion, and
- the inspection system (1) according to one of the claims 1 to 10, wherein the inspection system is arranged downstream of the cable processing module (5) and configured to inspect the cable portion (102) of a processed cable (100) processed by the cable processing module (5).

12. The cable processing system (3) of claim 11, wherein the inspection area (20) and the cable processing module (5) are arranged and configured for in-line inspection of the processed cable by the inspection system (1),
and/or
wherein the cable processing module (5) is configured for crimping and/or is configured for coaxial cable processing and/or is configured for multi-layer cable processing and/or is configured for multi-core cable processing and/or is configured for ribbon cable processing and/or is configured for welding and/or is configured for splicing and/or is configured for terminal insertion.

13. The cable processing system (3) of claim 11 or 12, wherein the inspection area (20) is arranged between the cable processing module (5) and the cable holder (10), wherein the cable holder (10) is configured to move the cable portion through the inspection area and provide the cable portion to the cable processing module (5) and to remove the cable portion from the cable processing module (5) and arrange the cable portion in the inspection area.

14. A method for optical inspection of a cable portion (102) of a processed cable (100), comprising
- providing the inspection system (1) of one of the claims 1 to 10 and/or a cable processing system (3) of one of claims 11 to 13,
- arranging the cable portion (102) of the processed cable in the inspection area,
- emitting the two-dimensional structured source light pattern by the light pattern emitter towards the inspection area such that the two-dimensional structured source light pattern is projected on and reflected by the surface of the cable portion,
- receiving the reflected two-dimensional light pattern by the optical receiver,
- determining by the analysis device the three-dimensional profile of the cable portion based on the received reflection data set, and
- determining by the analysis device at least one characteristic of the cable portion based on the three-dimensional profile.

15. The method of claim 14, comprising
- arranging the optical system and the cable holder in a first position relative to each other,
- emitting the two-dimensional structured source light pattern and receiving the reflected two-dimensional light pattern indicative for the first position,
- rotating the optical system and/or the cable holder relative to each other,
- when the optical system and the cable holder are in the second position, emitting the two-dimensional structured source light pattern and receiving the reflected two-dimensional light pattern indicative for the second position,
- determining by the analysis device the three-dimensional profile of the cable portion based on the received reflection data set indicative of the first position and the received reflection data set indicative of the second position.
